# DEMANDE DE BREVET EUROPEEN

(11) **EP 2 747 510 A1**
(43) Date de publication de la demande: **25.06.2014**
(21) Numéro de dépôt: 13198490.8
(22) Date de dépôt: 19.12.2013
(51) Int. Cl.: H04W 76/04, H04W 28/24, H04W 76/06, H04W 4/10, H04W 80/10, H04L 29/06

(54) **Procédé de communication, terminal superviseur et programme d'ordinateur associés pour le remplacement d'un premier service de communication par un second service de communication pendant la fourniture du premier service**

(30) Priorité: 20.12.2012 FR 1203527
(71) Demandeur: Thales, 92200 Neuilly Sur Seine (FR)
(72) Inventeur: Rousseau, Stéphane, 78141 VELIZY CEDEX (FR); Klech, Guillaume, 78141 VELIZY CEDEX (FR); Mathieu, Christophe, 78141 VELIZY CEDEX (FR)
(74) Mandataire: Blot, Philippe Robert Emile

(57) **Abrégé**

Procédé de communication, une liaison de communication ayant été attribuée par un module gestionnaire de ressources selon une première valeur de caractéristique de débit, latence ou gigue requis pour la fourniture d'un premier service sur ladite liaison entre un premier (10) et un deuxième (10) terminal de communication, comprenant les étapes suivantes :
- émission d'une requête pour remplacer ledit premier service de communication par un deuxième service de communication entre au moins les premier et deuxième terminaux ;
- suite à la réception de ladite requête par le module gestionnaire de ressources du réseau, remplacement, par ledit module gestionnaire de ressources, de la première valeur de ladite caractéristique une deuxième valeur requise pour la fourniture dudit deuxième service ;
- fourniture du deuxième service de communication à la place du premier service de communication entre les premier et deuxième terminaux sur ladite liaison de communication.

## Description

La présente invention concerne un procédé de communication dans un réseau de communications, une liaison de communication ayant été attribuée par un module gestionnaire de ressources selon un ensemble de caractéristiques requis pour la fourniture d'un premier service sur ladite liaison et étant établie entre au moins entre un premier terminal de communication et un deuxième terminal de communication du réseau de communications. L'ensemble de caractéristiques requis pour la fourniture du premier service sur ladite liaison comprend une première valeur d'au moins une caractéristique de débit et/ou latence et/ou gigue.

Par exemple, dans les réseaux de type LTE (en anglais « Long Term Evolution »), un module gestionnaire de ressources, nommé noeud PCRF (en anglais « Policy and Charging Rules Function »), permet d'attribuer des ressources de communication nécessaires pour fournir un service requis.

Un certain nombre de services de communication requiert des ressources de communication de caractéristiques différentes.

Ainsi les communications bidirectionnelles alternées de type « voix », encore appelée Half-Duplex voix ou Push-To-Talk (PTT), les communications bidirectionnelles alternées de type « voix et vidéo » (comprenant la transmission en temps réel de la voix en même temps que la vidéo), encore appelée Half-Duplex « vidéo et voix » ou encore Push-To-Vidéo, les communications bidirectionnelles simultanées de type « voix », encore appelée Full-Duplex vidéo voix, les communications bidirectionnelles simultanées de type « voix et vidéo » (comprenant la transmission en temps réel de la voix en même temps que la vidéo), encore appelée Full-Duplex « voix et vidéo », nécessitent des ressources avec des caractéristiques qui sont distinctes, en terme de débit, et/ou en terme de latence et/ou en terme de gigue de communication.

Le document US 7526306 par exemple décrit des communications de type PTT.

Le document US 2006/0114314 décrit des communications Half-Duplex « vidéo et voix ».

Le document US 2006/0172754 décrit des communications en Full Duplex dans un réseau PMR (« Private Mobile Radiocommunication »).

Dans les réseaux de type LTE, suite à une requête d'un premier service, par exemple un service PTT, entre deux terminaux utilisateurs A et B, un échange par l'intermédiaire d'une interface du PCRF, entre un serveur d'application supervisant ledit premier service et le noeud PCRF, donne lieu à l'attribution par le noeud PCRF, d'une ressource de communication entre les terminaux utilisateurs A et B, présentant des caractéristiques, notamment de débit et/ou de latence, nécessaires pour ce premier service.

Cette interface, nommée Rx, est définie dans la version 9 de la norme ETSI 3GPP relative à la technologie LTE.

Quand un des terminaux utilisateurs A et B souhaite un deuxième service, par exemple de type Push-To-Video, il doit clôturer le premier service, ce qui libère la ressource correspondante. Puis il effectue une requête de fourniture du deuxième service. Un échange, par l'intermédiaire de l'interface Rx, entre le serveur d'application supervisant ledit deuxième service, donne lieu à l'attribution d'une ressource de communication entre les terminaux utilisateurs A et B, avec les caractéristiques, notamment, de débit et/ou latence et/ou gigue nécessaires pour ce deuxième service.

Suivant un premier aspect, l'invention propose un procédé de communication du type précité caractérisé en ce qu'il comprend les étapes suivantes pendant la fourniture du premier service sur ladite liaison de communication :
- émission d'une requête pour remplacer ledit premier service de communication par un deuxième service de communication entre au moins les premier et deuxième terminaux ;
- suite à la réception de ladite requête par le module gestionnaire de ressources du réseau, remplacement, par ledit module gestionnaire de ressources, de la première valeur de ladite caractéristique de la liaison de communication établie, par une deuxième valeur, distincte de la première valeur et requise pour la fourniture dudit deuxième service ;
et en ce qu'il comporte en outre une étape de fourniture du deuxième service de communication à la place du premier service de communication entre les premier et deuxième terminaux sur ladite liaison de communication.

Un avantage conféré par l'invention est de permettre un changement dynamique de type de service de communication, sans interrompre la communication en cours entre les terminaux de communication. Ainsi, tandis que dans l'art antérieur, il n'était pas possible d'ajouter un service d'envoi de vidéo lors d'un appel phonie, cela devient possible selon l'invention.

Dans des modes de réalisation, le procédé suivant l'invention comporte en outre une ou plusieurs des caractéristiques suivantes :
- les premier et deuxième services de communication comprennent des services distincts parmi les services de communication bidirectionnelle alternée ou simultanée, de type appels phonie ou appels vidéo ;
- le procédé comprend pendant la fourniture du premier service sur ladite liaison de communication, une étape de détection, par un terminal parmi le premier terminal et le deuxième terminal, de la sélection, par un utilisateur du terminal, du deuxième service de l'ensemble de deuxième(s) service(s) distinct(s) du premier service, ladite étape d'émission de la requête étant réalisée par ledit terminal en fonction de ladite étape de détection ;
- le procédé comprend une étape d'affichage, pendant la fourniture du premier service sur ladite liaison de communication, sur un écran d'affichage d'au moins un terminal parmi le premier terminal et le deuxième terminal, d'un sous-menu du menu d'exploitation du premier service couramment fourni, ledit sous-menu listant un ensemble de deuxième(s) service(s) distinct(s) du premier service couramment fourni et comprenant au moins le deuxième service de communication ; et il comprend une étape de détection, par ledit terminal, de la sélection, par un utilisateur du terminal, du deuxième service de l'ensemble de deuxième(s) service(s) distinct(s) du premier service, ladite étape d'émission de la requête étant réalisée par ledit terminal en fonction de ladite étape de détection ;
- le procédé comprend une étape d'affichage, pendant la fourniture du premier service sur ladite liaison de communication, sur un écran d'affichage d'au moins un terminal superviseur distant du premier terminal et du deuxième terminal, d'un sous-menu du menu d'exploitation relatif du premier service couramment fourni, ledit sous-menu listant un ensemble de deuxième(s) service(s) distinct(s) du premier service et comprenant au moins le deuxième service de communication ; et il comprend une étape de détection, par ledit terminal superviseur, de la sélection par un utilisateur dudit terminal superviseur, du deuxième service de l'ensemble de deuxième(s) service(s) distinct(s) du premier service, ladite étape d'émission de la requête étant réalisée par ledit terminal superviseur en fonction de ladite étape de détection ;
- le procédé comprend une étape de comparaison, avec un seuil fixé, de la durée de non-utilisation d'une fonctionnalité présente dans le premier service et absente dans le deuxième service, et selon lequel l'émission de la requête est fonction de l'étape de comparaison ;
- le réseau de communication comprend un réseau LTE et le module gestionnaire de ressources est un noeud PCRF.

Suivant un deuxième aspect, la présente invention propose un terminal utilisateur, adapté pour suite à l'établissement d'une liaison de communication entre au moins ledit terminal et un autre terminal de communication dans un réseau de communications et attribuée par un module gestionnaire de ressources selon un ensemble de caractéristiques requis pour la mise en oeuvre d'un premier service et comprenant une première valeur d'au moins une caractéristique de débit et/ou latence et/ou gigue, mettre en oeuvre ledit premier service sur ladite liaison de communication ;
ledit terminal étant caractérisé en ce qu'il est en outre adapté pour, pendant la mise en oeuvre du premier service sur ladite liaison de communication, recevoir une notification, en provenance du réseau, relative au remplacement dudit premier service de communication par un deuxième service de communication entre au moins le terminal et ledit autre terminal ;
et en ce qu'il est adapté pour, suite à ladite notification, mettre en oeuvre ledit deuxième service de communication avec l'autre terminal, sur ladite liaison de communication modifiée, à la place dudit premier service de communication.

Suivant un troisième aspect, la présente invention propose un terminal superviseur, adapté pour suite à l'établissement d'une liaison de communication entre au moins un terminal de communication et un autre terminal de communication dans un réseau de communications, attribuée par un module gestionnaire de ressources selon un ensemble de caractéristiques requis pour la mise en oeuvre d'un premier service et comprenant une première valeur d'au moins une caractéristique de débit et/ou latence et/ou gigue et à la mise en oeuvre dudit premier service sur ladite liaison de communication, afficher un menu de supervision dudit premier service mis en oeuvre entre lesdits terminal et autre terminal ;
ledit terminal superviseur étant caractérisé en ce qu'il est en outre adapté pour, pendant la mise en oeuvre du premier service sur ladite liaison de communication, émettre une requête pour remplacer ledit premier service de communication par un deuxième service de communication entre au moins le terminal de communication et ledit autre terminal de communication ;
et en ce qu'il est adapté pour, suite au remplacement par ledit module gestionnaire de ressources de la première valeur de ladite caractéristique de la liaison de communication établie par une deuxième valeur, distincte de la première valeur, requise pour la mise en oeuvre dudit deuxième service, afficher un menu de supervision dudit deuxième service mis en oeuvre entre lesdits terminal de communication et autre terminal de communication.

Suivant un quatrième aspect, la présente invention propose un programme d'ordinateur destiné à un terminal de communication d'un réseau de communications, comprenant des instructions logicielles, qui lorsqu'elles sont exécutées sur des moyens de calcul, mettent en oeuvre les étapes suivantes, suite à l'établissement d'une liaison de communication entre au moins ledit terminal et un autre terminal de communication dans un réseau de communications et attribuée par un module gestionnaire de ressources selon un ensemble de caractéristiques requis pour la mise en oeuvre d'un premier service et comprenant une première valeur d'au moins une caractéristique de débit et/ou latence et/ou gigue, mettre en oeuvre ledit premier service sur ladite liaison de communication :
- pendant la mise en oeuvre du premier service sur ladite liaison de communication, réception d'une notification, en provenance du réseau, relative au remplacement dudit premier service de communication par un deuxième service de communication entre au moins le terminal et ledit autre terminal ;
- suite à ladite notification, mise en oeuvre dudit deuxième service de communication avec l'autre terminal, sur ladite liaison de communication modifiée, à la place dudit premier service de communication.

Suivant un cinquième aspect, la présente invention propose un programme d'ordinateur destiné à un terminal superviseur d'un réseau de communications comprenant des instructions logicielles, qui lorsqu'elles sont exécutées sur des moyens de calcul, mettent en oeuvre les étapes suivantes, suite à l'établissement d'une liaison de communication entre au moins un terminal de communication et un autre terminal de communication dans un réseau de communications, attribuée par un module gestionnaire de ressources selon un ensemble de caractéristiques requis pour la mise en oeuvre d'un premier service et comprenant une première valeur d'au moins une caractéristique de débit et/ou latence et/ou gigue et à la mise en oeuvre dudit premier service sur ladite liaison de communication :
- afficher un menu de supervision dudit premier service mis en oeuvre entre lesdits terminal et autre terminal ;
- pendant la mise en oeuvre du premier service sur ladite liaison de communication, émettre une requête pour remplacer ledit premier service de communication par un deuxième service de communication entre au moins le terminal de communication et ledit autre terminal de communication ;
- suite au remplacement par ledit module gestionnaire de ressources de la première valeur de ladite caractéristique de la liaison de communication établie par une deuxième valeur, distincte de la première valeur, requise pour la mise en oeuvre dudit deuxième service, afficher un menu de supervision dudit deuxième service mis en oeuvre entre lesdits terminal de communication et autre terminal de communication.

Ces caractéristiques et avantages de l'invention apparaîtront à la lecture de la description qui va suivre, donnée uniquement à titre d'exemple, et faite en référence aux dessins annexés, sur lesquels :
- la figure 1 représente un réseau de communication dans un mode de réalisation de l'invention ;
- la figure 2 schématise l'architecture du réseau de la figure 1 dans un mode de réalisation de l'invention ;
- la figure 3 est un organigramme d'étapes mises en oeuvre dans un mode de réalisation de l'invention ;
- la figure 4 est un organigramme d'étapes mises en oeuvre dans un mode de réalisation de l'invention
- la figure 5 illustre un changement de service dans un mode de réalisation de l'invention.

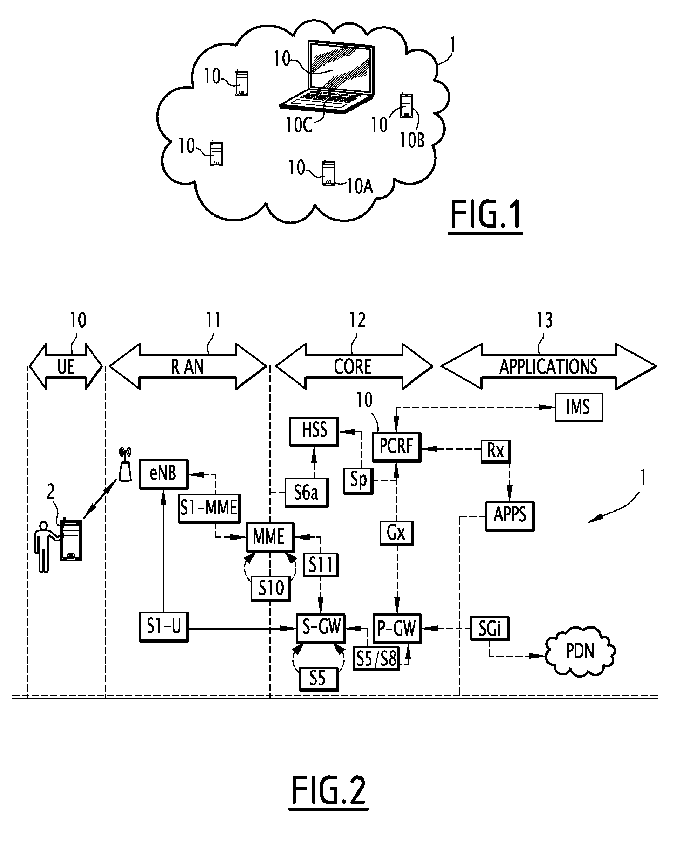

Sur la figure 1, un réseau de communication 1 dans un mode de réalisation de l'invention est représenté permettant de mettre en oeuvre des télécommunications entre des terminaux utilisateurs 10, par exemple accédant au réseau par voie radio.

Dans le cas considéré, la mise en oeuvre de l'invention est décrite relativement à un réseau 1 de type LTE.

En référence à la figure 2, l'architecture d'un tel réseau 1 comporte les éléments fonctionnels suivants : les terminaux utilisateurs 10, dits « UE » (en anglais « User Equipment »), le réseau d'accès radio 11 « RAN » (en anglais « Radio Access Network »), la partie centrale du réseau 12 « CORE » et la partie « APPLICATIONS » 13.

Cette architecture est connue de l'homme du métier, définie dans les normes LTE.

Chaque terminal utilisateur mobile 10 est adapté pour accéder au RAN par voie radio. Dans le RAN 11, un module « eNB » (en anglais « eNodeB ») est adapté pour s'interfacer par voie radio avec ce terminal utilisateur 10 lorsqu'un tel module eNB se trouve à proximité radio du terminal 10.

Le module MME, à la frontière entre le RAN 11 et le CORE 12 est adapté pour gérer le rattachement du terminal utilisateur 10 au réseau 1 et est adapté pour communiquer notamment avec le module HSS du CORE 12 pour vérifier qu'un terminal utilisateur 10 est bien référencé dans le réseau 1, et avec le S-GW pour lui mettre en service une liaison de communication (en anglais « bearer ») impliquant ce terminal utilisateur en fonction de cette vérification.

Dans le CORE 12, les modules S-GW et P-GW sont adaptés pour contribuer à mettre en oeuvre une liaison de communication entre des terminaux utilisateurs et le module PCRF est adapté pour attribuer et gérer les caractéristiques des liaisons attribuées, notamment en termes de débit minimal garanti sur la liaison, et/ou de latence maximale garantie sur la liaison.

Dans la partie « APPLICATIONS » 13, un serveur APPS est adapté pour gérer l'accès des terminaux utilisateurs à au moins un service de communication.

Les blocs situés entre deux modules sur la figure 2 et reliés à chacun de ces modules par une flèche en pointillés désignent les interfaces entre les modules. Par exemple, l'interface Rx permet d'interfacer les modules PCRF et APPS.

Dans un mode de mise en oeuvre de l'invention, les étapes suivantes sont réalisées.

Ces étapes sont consécutives à l'exécution d'instructions logicielles correspondantes dans les terminaux ou modules concernés du réseau 1.

Considérons qu'un utilisateur A du terminal utilisateur 10A souhaite établir un service de PTT avec un utilisateur B du terminal utilisateur 10B, ces deux terminaux utilisateurs faisant partie des terminaux 10 du réseau 1 et comportent chacun un écran et un clavier.

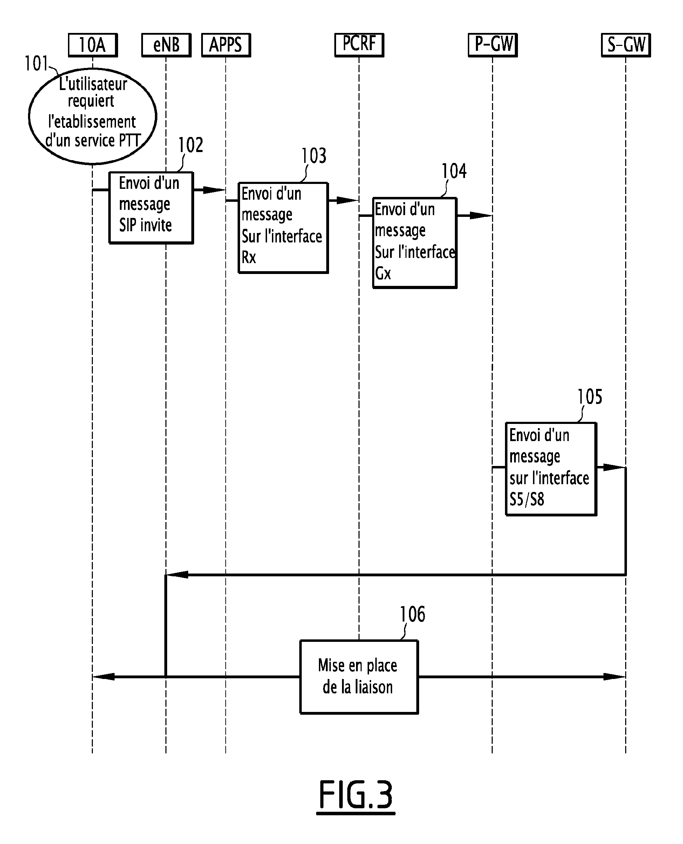

En référence à la figure 3, dans une étape 101, l'utilisateur A commande au terminal 10A la mise en place d'un service de PTT avec l'utilisateur B.

Par exemple, cette commande est effectuée par l'utilisateur A en appuyant d'abord sur un bouton du terminal 10A indiquant la sélection du service PTT (ce bouton peut être un bouton matériel ou bien être représenté sur un écran tactile du terminal) ou en sélectionnant à l'aide du clavier du terminal 10A, une option d'un menu présentant l'ensemble des services de communication proposés comprenant par exemple un service PTT et un service PTT vidéo. Suite à cette sélection du service, le terminal 10A affiche sur son écran, une liste de contacts possibles de l'utilisateur A pour participer à ce service PTT. L'utilisateur du terminal A sélectionne l'utilisateur B du terminal 10B.

Dans une étape 102, le terminal utilisateur 10A détecte cette commande de l'utilisateur. Il transmet alors, par l'intermédiaire du réseau 1 et notamment de l'eNB auquel il est interfacé, au serveur APPS en charge du service PTT, un message par exemple un message de type « SIP Invite » indiquant cette commande de service PTT, l'identification du terminal 10A dont elle provient, l'identification du terminal 10B destinataire.

Dans une étape 103, le serveur APPS vérifie, en fonction du contenu de bases de données correspondant à l'utilisateur A que l'utilisateur A est bien autorisé pour requérir la fourniture du service PTT, vérifie en outre si le destinataire B peut participer à un tel service.

Il vérifie en outre si le destinataire B et/ou le terminal utilisateur 10B est joignable. Puis il vérifie si le destinataire B et/ou le terminal utilisateur 10B souhaite être destinataire du service PTT requis par l'utilisateur A, en envoyant un message « SIP Invite » au terminal 10B indiquant le service PTT et l'identification du terminal 10A qui le requiert.

Le serveur APPS détermine les éventuelles particularités associées à la fourniture du service PTT à cet utilisateur A et/ou au terminal 10A, à l'utilisateur B et/ou au terminal utilisateur 10B. Puis si la fourniture du service requis est bien autorisée et qu'un message positif est reçu en provenance du terminal utilisateur 10B en réponse au message « SIP Invite » qui lui a été envoyé, le serveur APPS envoie un message au module PCRF via l'interface Rx requérant la fourniture d'un service PTT, l'identification du terminal 10A dont elle provient, l'identification du terminal 10B destinataire et les éventuelles particularités associées à la fourniture du service PTT.

Si la fourniture du service requis n'est pas autorisée ou qu'un message négatif est reçu en provenance du terminal utilisateur 10B en réponse au message « SIP Invite » qui lui a été envoyé, un message est envoyé par le serveur APPS au terminal 10A indiquant à ce dernier que le service PTT commandé ne peut lui être fourni et commandant l'affichage d'une mention correspondante sur l'écran du terminal 10A.

Dans une étape 104, le module PCRF reçoit le message de requête envoyé par le serveur APPS. Il détermine si le terminal 10A et/ou le terminal 10B est bien autorisé à mettre en oeuvre ce service. Puis si la fourniture du service requis est bien autorisée, il autorise l'établissement de la liaison de communication à établir entre les terminaux 10A et 10B pour fournir le service PTT requis. Il détermine un niveau de qualité de service parmi un ensemble comportant plusieurs niveaux, par exemple 5 niveaux : Q1, Q2, Q3, Q4 et Q5 correspondant au service requis. Le niveau de qualité de service indiqué est fonction du service requis. Il est représentatif de la valeur, qui est définie en fonction du service requis, de la latence maximale et/ou du débit minimum et/ou de la gigue maximum sur la liaison. Par exemple, Q1 correspond au service PTT.

Le débit minimum d'une liaison est la quantité minimum de données (par exemple le nombre de bits, le nombre de paquets de données) transmis par seconde sur la liaison.

La latence maximum d'une liaison est le délai maximum s'écoulant entre l'envoi d'une donnée depuis une extrémité de la liaison et la réception de cette donnée à l'autre extrémité de la liaison.

La gigue maximum d'une liaison est le délai de réception maximum entre deux paquets consécutivement émis.

Par exemple, dans le cas considéré, un débit minimum de 8 kbps (kilobits par seconde) ou une latence maximum 150 ms (millisecondes) ou une gigue minimum de 100 ms sont fixés.

Le module PCRF transmet alors un message au module P-GW à travers l'interface Gx, requérant la mise en oeuvre effective des caractéristiques correspondant à Q1 sur une liaison à allouer entre les terminaux 10A et 10B.

Dans une étape 105, le module P-GW relaye ce message via le module S-GW, par l'interface S5/S8 à destination in fine de l'eNB du terminal 10A

Suite à la réception de ce message, dans une étape 106, l'eNB du terminal 10A, après vérification que les ressources radio sont suffisantes, met en place une liaison de communication correspondant au niveau Q1 requis entre le terminal 10A et le terminal 10B.

La communication est alors établie dans l'étape 107 (non représentée) entre les terminaux utilisateurs 10A et 10B, et le service PTT est alors utilisé par les utilisateurs A et B de ces terminaux en utilisant cette liaison de communication, chacun pouvant parler à l'autre, de façon non simultanée, par exemple en appuyant sur un bouton de leur terminal utilisateur.

Pendant cette communication, lors de leurs échanges en PTT, un menu d'exploitation du service PTT est proposé par le terminal utilisateur 10A à l'utilisateur A, par exemple par affichage, sur l'écran, de champs sélectionnables par l'utilisateur A.

Ces champs comprennent par exemple un champ « FIN » pour mettre fin à la communication et permettre la libération de la liaison, un champ « DESTINATAIRE ADDITIONNEL » pour communiquer avec un destinataire supplémentaire via ce service PTT, et un champ « passage vers PUSH-TO-VIDEO».

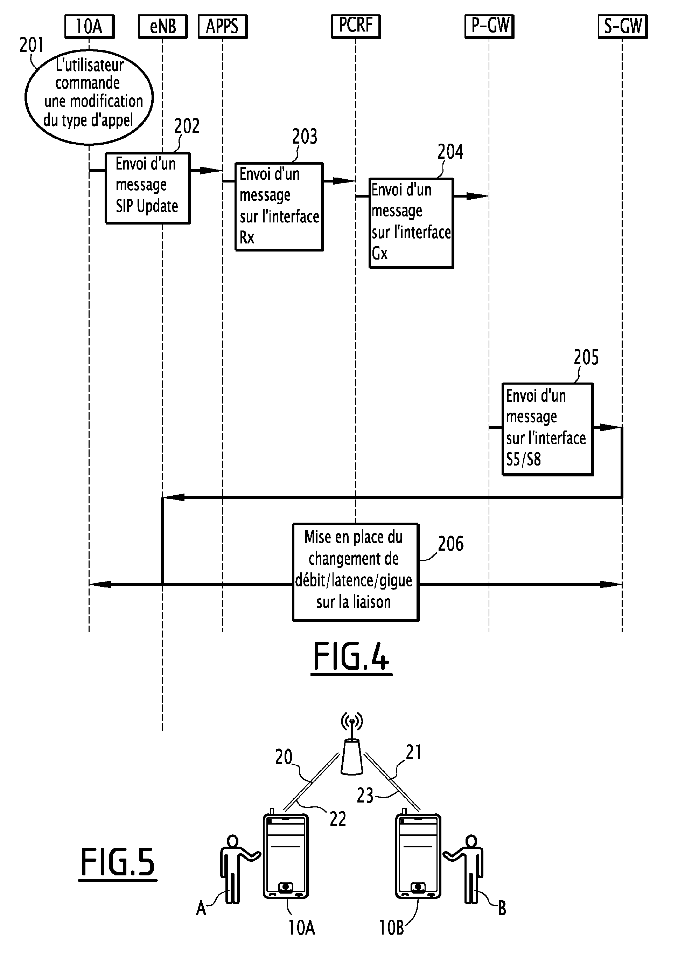

Dans un mode de réalisation, en référence à la figure 4, les étapes suivantes sont mises en oeuvre.

Dans une étape 201, l'utilisateur A sélectionne le champ « passage vers PUSH-TO-VIDEO », par exemple en pressant ce champ sur l'écran du terminal 10A avec son doigt, dans le cas d'un écran tactile, ou encore en utilisant les touches du clavier. Il commande ainsi au terminal 10A le remplacement du service PTT avec l'utilisateur B par un service PUSH-TO-VIDEO avec l'utilisateur B, sans interruption de communication.

Dans une étape 202, le terminal utilisateur 10A détecte cette commande de l'utilisateur. Il transmet alors, par l'intermédiaire du réseau 1 et notamment de l'eNB auquel il est interfacé, au serveur en charge du service PUSH-TO-VIDEO, qui est ici également le serveur APPS, un message par exemple un message de type « SIP Update » indiquant cette commande de remplacement du service PTT avec l'utilisateur B par un service PUSH-TO-VIDEO et l'identification du terminal 10A dont elle provient.

Dans une étape 203, le serveur APPS vérifie, en fonction du contenu de bases de données correspondant à l'utilisateur A, que l'utilisateur A est bien autorisé pour requérir la fourniture du service PUSH-TO-VIDEO, vérifie en outre si le destinataire B peut participer à un tel service.

Il vérifie en outre si le destinataire B souhaite être destinataire du service PUSH-TO-VIDEO en remplacement du service PTT sans interruption de communication tel que requis par l'utilisateur A, en envoyant un message « SIP Update » au terminal 10B indiquant le service PUSH-TO-VIDEO en remplacement du service PTT sans interruption de communication, et indiquant en outre l'identification du terminal 10A qui le requiert.

Le serveur APPS détermine les éventuelles particularités associées à la fourniture du service PUSH-TO-VIDEO à cet utilisateur A et/ou au terminal 10A, à l'utilisateur B et/ou au terminal utilisateur 10B

Puis, si la fourniture du service PUSH-TO-VIDEO est bien autorisée et qu'un message positif est reçu en provenance du terminal utilisateur 10B en réponse au message « SIP Update » qui lui a été envoyé (l'utilisateur B ayant accepté le remplacement du service PTT par le service PUSH-TO-VIDEO sans interruption de communication), le serveur APPS envoie un message au module PCRF via l'interface Rx. Ce message requiert la fourniture d'un service PUSH-TO-VIDEO en remplacement du service PTT sans interruption de communication, indique en outre l'identification du terminal 10A dont elle provient, l'identification du terminal 10B destinataire et les éventuelles particularités associées à la fourniture du service PUSH-TO-VIDEO.

Si la fourniture du service PUSH-TO-VIDEO n'est pas autorisée ou qu'un message négatif est reçu en provenance du terminal utilisateur 10B en réponse au message « SIP Update » qui lui a été envoyé, un message est envoyé par le serveur APPS au terminal 10A lui indiquant que le service PUSH-TO-VIDEO commandé ne peut lui être fourni.

Dans une étape 204, le module PCRF reçoit le message de requête envoyé par le serveur APPS, Il détermine si le terminal 10A et/ou le terminal 10B est bien autorisé à mettre en oeuvre ce service PUSH-TO-VIDEO. Puis si la fourniture du service requis est bien autorisée, il détermine, en fonction de ce message, notamment du service PUSH-TO-VIDEO qui y est indiqué, la ou les modification(s) de qualité de service à établir sur la liaison de communication entre les terminaux 10A et 10B pour fournir le service PUSH-TO-VIDEO en remplacement du service PTT, notamment en terme de latence maximum et/ou de débit minimum et/ou de gigue maximum sur la liaison. Le niveau de qualité de service passe ici de Q1 à Q2.

Il transmet alors un message au module P-GW à travers l'interface Gx, requérant la mise en oeuvre effective des modifications de caractéristiques (passage de Q1 en Q2) de cette liaison allouée entre les terminaux 10A et 10B.

Par exemple, dans le cas considéré, les modifications portent sur la valeur de débit minimum, qui devient 300 kbps.

Dans une étape 205, le module P-GW relaye ce message via le module S-GW, par l'interface S5/S8 à destination in fine de l'eNB du terminal 10A.

Suite à la réception de ce message, dans une étape 206, l'eNB du terminal10A, après vérification que les ressources radio sont suffisantes, modifie les caractéristiques de la liaison de communication entre le terminal 10A et le terminal 10B de manière à ce qu'elle corresponde au niveau Q2 requis, notamment en terme de débit.

Sur la liaison bidirectionnelle alternée ainsi maintenue entre les terminaux utilisateurs 10A et 10B et dont les caractéristiques de débit et/ou de latence et/ou gigue ont été ajustées au service PUSH-TO-VIDEO, dans une étape 207 (non représentée), ce service PUSH-TO-VIDEO peut alors être utilisé par les utilisateurs A et B de ces terminaux, chacun pouvant envoyer à l'autre sur cette liaison, à tour de rôle, des photos ou des vidéos, en plus de données voix. Ces photos ou vidéos capturées par exemple avec un capteur d'images intégré dans le terminal utilisateur ou sont extraites de la mémoire du terminal utilisateur.

Par exemple, dès que les caractéristiques ajustées au service PUSH-TO-VIDEO sont établies sur la liaison entre les terminaux utilisateurs A et B, le capteur d'images devient actif. En outre, un menu d'exploitation du service PUSH-TO-VIDEO s'affiche à la place du menu d'exploitation du service PTT sur l'écran du terminal utilisateur 10A. Ce menu comporte par exemple un champ « FIN » pour mettre fin à la communication et permettre la libération de la liaison, un champ « DESTINATAIRE ADDITIONNEL » pour communiquer avec un destinataire supplémentaire via ce service PTT, et un champ « passage vers PTT».

Dans la configuration représentée en figure 5, les terminaux 10A et 10B dépendent du même eNB.

Pendant les étapes 107, 201 à 206, la liaison de communication établie pour mettre en oeuvre le service PTT entre les terminaux 10A et 10B comporte les ressources radio 20 et 21 (par exemple chacun sous la forme d'une partie dédiée d'un canal radio, par multiplexage temporel ou fréquentiel). Puis dans l'étape 207, les ressources radio 22, 23 sont ajoutées à la liaison de communication entre les terminaux 10A et 10B de manière à pouvoir mettre en oeuvre le service PUSH-TO-VIDEO.

Une fois que les utilisateurs A, B auront transmis les photos/vidéos, l'un ou l'autre peut commander, dans une nouvelle étape, le passage au service PTT sans interruption de la communication, de façon similaire à ce qui a été détaillé ci-dessus.

L'invention permet ainsi de passer d'un service de communication à un autre sans interrompre la communication en cours. Il devient notamment possible d'ajouter ou supprimer la capture et/ou l'envoi de photos/vidéos lors d'un appel au niveau d'un terminal utilisateur et d'ajuster les ressources de transmission nécessaires en fonction de ces ajouts et suppressions.

La communication en cours n'est pas interrompue : il n'est pas nécessaire d'interrompre la communication, puis de renouveler l'appel pour mettre en place le deuxième service, en ré-indiquant le destinataire. Les utilisateurs A et B restent en communication.

Ce maintien de la communication peut être très appréciable en cas de situation d'urgence, notamment dans le cas de réseaux de radiocommunication PMR par exemple pour les équipes d'intervention de pompiers, de policiers.

Ce maintien de la communication peut être très appréciable lorsque les ressources de communication, notamment radio, sont rares, en permettant de réajuster les ressources en fonction des besoins en temps réel des utilisateurs.

Il n'est pas nécessaire de réengager les échanges de signalisation, de type « SIP Invite », pendant lesquels le service de communication ne peut être rendu entre A et B.

Dans le mode de réalisation décrit ci-dessus, c'est le terminal A qui a requis la fourniture du service PTT, puis le changement de service PTT en service Push-to-Video. Dans un autre mode de réalisation, c'est l'utilisateur B du terminal 10B qui requiert le changement de service.

Dans ce cas, les rôles de l'utilisateur B et du terminal 10B dans les étapes représentés en figure 4 sont intervertis avec ceux de l'utilisateur A et du terminal 10A.

Dans le mode de réalisation décrit ci-dessus, deux terminaux utilisateurs sont mis en communication. Dans d'autres modes de réalisation, davantage de terminaux utilisateurs sont mis en communication pour le service. Par exemple, un service de communication PTT commandé par l'utilisateur A peut comporter 3 destinataires distincts B, C et D. L'invention est alors mise en oeuvre pour modifier les caractéristiques des liaisons relativement à l'ensemble des destinataires lors du changement de service, sans interrompre la communication.

L'invention peut être appliquée pour tous services de communication successifs fournis à au moins deux terminaux utilisateurs sans rupture de la communication entre ces deux terminaux permettant la fourniture de ce service, avec une adaptation de la latence ou du débit sur la liaison de communication entre

Les deux services concernés sont par exemple des services distincts quelconques parmi des types d'appels définies dans la norme LTE 3GOO : communications bidirectionnelles alternées de type voix, encore appelée Half-Duplex voix ou Push-To-Talk (PTT), communications bidirectionnelles alternées de type « voix et vidéo » (comprenant la transmission en temps réel de la voix en même temps que la vidéo), encore appelée Half-Duplex « vidéo et voix » ou encore Push-To-Vidéo, communications bidirectionnelles simultanées de type voix, encore appelée Full-Duplex « voix et vidéo », communications bidirectionnelles simultanées de type « voix et vidéo » (comprenant la transmission en temps réel de la voix en même temps que la vidéo), encore appelée Full-Duplex vidéo voix.

Dans un mode de réalisation, cette fonctionnalité de changement de service sans rupture de communication est proposée à l'utilisateur, pendant la fourniture d'un tel service, dans chaque terminal utilisateur ou seulement dans certains terminaux utilisateurs, en fonction de données relatives au terminal utilisateur ou à son utilisateur.

Dans un mode de réalisation de l'invention, les communications entre les terminaux utilisateurs, notamment par exemple, la communication entre les terminaux utilisateurs 10A, 10B, sont supervisées par un terminal superviseur 10C.

L'utilisateur C d'un tel terminal superviseur est par exemple le supérieur hiérarchique des utilisateurs A et B. Grâce à son terminal superviseur 10C, il peut écouter les échanges des utilisateurs A et B sur la liaison qui leur a été allouée. Dans un mode de réalisation, l'utilisateur C peut commander le passage d'un premier service à un deuxième service entre les utilisateurs A et B sur la liaison de communication, sans interruption de la communication.

Supposons que les terminaux utilisateurs sont considérés en communication PTT conformément à l'étape 107.

Sur l'écran du terminal superviseur 10C, pour toute communication superviseur et notamment pour le service PTT actuellement fourni entre les terminaux 10A et 10B, un menu propose des champs proposant des passages vers un ou plusieurs autre(s) service(s) sans interruption de la communication en cours.

Dans une étape 301, l'utilisateur C sélectionne, sur l'écran du terminal superviseur C, le champ « passage vers PUSH-TO-VIDEO » relatif à la communication en cours entre les terminaux 10A, 10B.

Dans une étape 302, le terminal superviseur 10C détecte cette commande de l'utilisateur. Il transmet alors, par l'intermédiaire du réseau 1, au serveur en charge du service PUSH-TO-VIDEO, qui est ici également le serveur APPS, un message par exemple un message de type « SIP Update » indiquant cette commande de remplacement du service PTT entre les utilisateurs A et B par un service PUSH-TO-VIDEO, l'identification du terminal superviseur 10C dont elle provient.

Dans une étape 303, le serveur APPS vérifie, en fonction du contenu de bases de données que l'utilisateur C est bien autorisé pour requérir le remplacement du service PTT par le service PUSH-TO-VIDEO dans une communication entre les terminaux utilisateurs 10A, 10B et/ou entre les utilisateurs, A et B.

Le serveur APPS détermine les éventuelles particularités associées à la fourniture du service PUSH-TO-VIDEO à cet utilisateur A et/ou au terminal 10A, à l'utilisateur B et/ou au terminal utilisateur 10B.

Puis si le remplacement par un service PUSH-TO-VIDEO quand requis par l'utilisateur C du terminal 10C est bien autorisé, le serveur APPS envoie un message au module PCRF via l'interface Rx requérant la fourniture d'un service PUSH-TO-VIDEO en remplacement du service PTT sans interruption de communication, l'identification des terminaux 10A, 10B et les éventuelles particularités associées à la fourniture du service PUSH-TO-VIDEO.

Les étapes 204 à 207 explicitées précédemment se déroulent alors.

Si la fourniture du service PUSH-TO-VIDEO n'est pas autorisée, un message est envoyé par le serveur APPS au terminal 10C lui indiquant que le service PUSH-TO-VIDEO commandé ne peut être fourni.

Après que le service PUSH-TO-VIDEO est disponible, un message provenant du serveur APPS est envoyé aux terminaux 10A, 10B, provoquant l'affichage sur l'écran des terminaux, d'un message informant les utilisateurs que le service PUSH-TO-VIDEO est maintenant fourni.

En outre, dans le menu de supervision de la communication entre les terminaux 10A, 10B, un champ « passage vers PTT» est notamment affiché.

Ce champ, selon les modes de réalisation de l'invention, est disponible ou non, dans le menu d'exploitation du service PUSH-TO-VIDEO alors disponible sur l'écran du terminal 10A et/ou 10B.

Dans un mode de réalisation de l'invention, des fonctions supplémentaires sont implémentées.

Par exemple, une fonction peut analyser l'utilisation effective d'une liaison par les terminaux utilisateurs communiquant sur cette liaison, comparer régulièrement cette utilisation effective aux caractéristiques du service requis et, en fonction de cette comparaison, suggérer, sur l'écran d'au moins un de ces terminaux utilisateur, à l'utilisateur du terminal, le passage à un autre service, sans interruption de communication, mieux adapté au profil courant de communication (par exemple en terme de type de contenus, notamment voix, vidéo ou données et/ou de profil d'utilisation).

Par exemple, si un service PUSH-TO-VIDEO est mis en oeuvre, il peut être détecté que seulement des données de phonie sont transmises depuis un temps supérieur à un seuil fixé, et alors un passage à un service PTT peut être suggéré.

Dans un mode de réalisation, ce passage est imposé à un utilisateur et dans un tel cas, un message l'informant du changement de service est indiqué sur l'écran.

De telles fonctions peuvent être implémentées selon les cas dans un terminal utilisateur engagé dans la communication, dans un terminal utilisateur superviseur d'une communication à laquelle il ne participe pas, et/ou encore dans un serveur d'application.

Dans le mode de réalisation décrit ci-dessus, l'invention est décrite relativement à des terminaux radios. Bien sûr, l'invention peut être mis en oeuvre également à l'aide de terminaux de tout type (téléphones mobiles, téléphones fixes, tablettes, ordinateurs, serveurs, par exemple serveur d'application donnant accès à une interface comprenant une caméra IP et un micro, etc.) et reliés au réseau par des liens autres que des liens radio : notamment filaires, optiques etc, les liaisons reliant des terminaux en communications présentant des caractéristiques devant être adaptées selon les services..

## Revendications

1. Procédé de communication dans un réseau (1) de communications, une liaison de communication ayant été attribuée par un module gestionnaire de ressources selon un ensemble de caractéristiques requis pour la fourniture d'un premier service sur ladite liaison et étant établie entre au moins entre un premier terminal (10) de communication et un deuxième terminal (10) de communication du réseau de communications, l'ensemble de caractéristiques requis comprenant une première valeur d'au moins une caractéristique de débit et/ou latence et/ou gigue sur ladite liaison ;
ledit procédé étant **caractérisé en ce qu'**il comprend les étapes suivantes pendant la fourniture du premier service sur ladite liaison de communication :
- émission d'une requête pour remplacer ledit premier service de communication par un deuxième service de communication entre au moins les premier et deuxième terminaux ;
- suite à la réception de ladite requête par le module gestionnaire de ressources du réseau, remplacement, par ledit module gestionnaire de ressources, de la première valeur de ladite caractéristique de la liaison de communication établie, par une deuxième valeur, distincte de la première valeur et requise pour la fourniture dudit deuxième service ;
**en ce qu'**il comporte en outre une étape de fourniture du deuxième service de communication à la place du premier service de communication entre les premier et deuxième terminaux sur ladite liaison de communication ;
comprenant en outre une étape d'affichage, pendant la fourniture du premier service sur ladite liaison de communication, sur un écran d'affichage d'au moins un terminal superviseur distant du premier terminal et du deuxième terminal, d'un sous-menu du menu d'exploitation relatif du premier service couramment fourni, ledit sous-menu listant un ensemble de deuxième(s) service(s) distinct(s) du premier service et comprenant au moins le deuxième service de communication ; et
comprenant une étape de détection, par ledit terminal superviseur, de la sélection par un utilisateur dudit terminal superviseur, du deuxième service de l'ensemble de deuxième(s) service(s) distinct(s) du premier service, ladite étape d'émission de la requête étant réalisée par ledit terminal superviseur en fonction de ladite étape de détection.

2. Procédé de communication selon la revendication 1, selon lequel les premier et deuxième services de communication comprennent des services distincts parmi les services de communication bidirectionnelle alternée ou simultanée, de type appels phonie ou appels vidéo.

3. Procédé de communication selon la revendication 1 ou 2, comprenant pendant la fourniture du premier service sur ladite liaison de communication, une étape de détection, par un terminal (10) parmi le premier terminal et le deuxième terminal, de la sélection, par un utilisateur du terminal, du deuxième service de l'ensemble de deuxième(s) service(s) distinct(s) du premier service, ladite étape d'émission de la requête étant réalisée par ledit terminal en fonction de ladite étape de détection.

4. Procédé de communication selon la revendication 3, comprenant une étape d'affichage, pendant la fourniture du premier service sur ladite liaison de communication, sur un écran d'affichage d'au moins un terminal parmi le premier terminal et le deuxième terminal, d'un sous-menu du menu d'exploitation du premier service couramment fourni, ledit sous-menu listant un ensemble de deuxième(s) service(s) distinct(s) du premier service couramment fourni et comprenant au moins le deuxième service de communication ; et
comprenant une étape de détection, par ledit terminal, de la sélection, par un utilisateur du terminal, du deuxième service de l'ensemble de deuxième(s) service(s) distinct(s) du premier service, ladite étape d'émission de la requête étant réalisée par ledit terminal en fonction de ladite étape de détection.

5. Procédé de communication selon l'une des revendications précédentes, comprenant une étape de comparaison, avec un seuil fixé, de la durée de non-utilisation d'une fonctionnalité présente dans le premier service et absente dans le deuxième service, et selon lequel l'émission de la requête est fonction de l'étape de comparaison.

6. Procédé de communication selon l'une des revendications précédentes, selon lequel le réseau de communication comprend un réseau LTE et le module gestionnaire de ressources est un noeud PCRF.

7. Terminal superviseur (C), adapté pour suite à l'établissement d'une liaison de communication entre au moins un terminal de communication et un autre terminal de communication dans un réseau de communications, attribuée par un module gestionnaire de ressources selon un ensemble de caractéristiques requis pour la mise en oeuvre d'un premier service et comprenant une première valeur d'au moins une caractéristique de débit et/ou latence et/ou gigue et à la mise en oeuvre dudit premier service sur ladite liaison de communication, afficher un menu de supervision dudit premier service mis en oeuvre entre lesdits terminal et autre terminal ;
ledit terminal superviseur étant **caractérisé en ce qu'**il est en outre adapté pour, pendant la mise en oeuvre du premier service sur ladite liaison de communication, émettre une requête pour remplacer ledit premier service de communication par un deuxième service de communication entre au moins le terminal de communication et ledit autre terminal de communication ;
et **en ce qu'**il est adapté pour, suite au remplacement par ledit module gestionnaire de ressources de la première valeur de ladite caractéristique de la liaison de communication établie par une deuxième valeur, distincte de la première valeur, requise pour la mise en oeuvre dudit deuxième service, afficher un menu de supervision dudit deuxième service mis en oeuvre entre lesdits terminal de communication et autre terminal de communication.

8. Terminal superviseur (C) selon la revendication 7, adapté pour, pendant la fourniture du premier service sur ladite liaison de communication, détecter la sélection, par un utilisateur du terminal superviseur (C), du deuxième service de l'ensemble de deuxième(s) service(s) distinct(s) du premier service, ladite étape d'émission de la requête étant réalisée par ledit terminal en fonction de ladite étape de détection.

9. Terminal superviseur (C) selon l'une des revendications 7 à 8, selon lequel les premier et deuxième services de communication comprennent des services distincts parmi les services de communication bidirectionnelle alternée ou simultanée, de type appels phonie ou appels vidéo.

10. Terminal superviseur (C) selon l'une quelconque des revendications 7 à 9, adapté pour afficher, pendant la fourniture du premier service sur ladite liaison de communication, sur un écran d'affichage du terminal superviseur (C), un sous-menu du menu d'exploitation du premier service couramment fourni, ledit sous-menu listant un ensemble de deuxième(s) service(s) distinct(s) du premier service couramment fourni et comprenant au moins le deuxième service de communication ; et adapté pour détecter la sélection par un utilisateur du terminal superviseur (C), du deuxième service de l'ensemble de deuxième(s) service(s) distinct(s) du premier service, ladite étape d'émission de la requête étant réalisée par ledit terminal superviseur (C) en fonction de ladite étape de détection.

11. Terminal superviseur (C) selon l'une des revendications 7 à 10, adapté pour comparer avec un seuil fixé, la durée de non-utilisation d'une fonctionnalité présente dans le premier service et absente dans le deuxième service, l'émission de la requête étant fonction de l'étape de comparaison.

12. Programme d'ordinateur destiné à un terminal superviseur (C) d'un réseau de communications comprenant des instructions logicielles, qui lorsqu'elles sont exécutées sur des moyens de calcul, mettent en oeuvre les étapes suivantes, suite à l'établissement d'une liaison de communication entre au moins un terminal de communication et un autre terminal de communication dans un réseau de communications, attribuée par un module gestionnaire de ressources selon un ensemble de caractéristiques requis pour la mise en oeuvre d'un premier service et comprenant une première valeur d'au moins une caractéristique de débit et/ou latence et/ou gigue et à la mise en oeuvre dudit premier service sur ladite liaison de communication :
- afficher un menu de supervision dudit premier service mis en oeuvre entre lesdits terminal et autre terminal ;
- pendant la mise en oeuvre du premier service sur ladite liaison de communication, émettre une requête pour remplacer ledit premier service de communication par un deuxième service de communication entre au moins le terminal de communication et ledit autre terminal de communication ;
- suite au remplacement par ledit module gestionnaire de ressources de la première valeur de ladite caractéristique de la liaison de communication établie par une deuxième valeur, distincte de la première valeur, requise pour la mise en oeuvre dudit deuxième service, afficher un menu de supervision dudit deuxième service mis en oeuvre entre lesdits terminal de communication et autre terminal de communication.
